# EUROPÄISCHE PATENTSCHRIFT

(11) **EP 4 089 469 B1**
(45) Veröffentlichungstag und Bekanntmachung des Hinweises auf die Patenterteilung: **24.07.2024**
(21) Anmeldenummer: 22170946.2
(22) Anmeldetag: 29.04.2022
(51) Int. Cl.: G02B 27/01

(54) **HEAD-UP-DISPLAY MIT ANZEIGEVORRICHTUNG**
HEAD-UP DISPLAY WITH DISPLAY DEVICE
AFFICHAGE TÊTE HAUTE POURVU DE DISPOSITIF D'AFFICHAGE

(30) Priorität: 12.05.2021 EP 21465519
(43) Veröffentlichungstag der Anmeldung: 16.11.2022
(73) Patentinhaber: Continental Automotive Technologies GmbH, 30175 Hannover (DE)
(72) Erfinder: Palm, Nils, 60488 Frankfurt am Main (DE); Schlupp, Sebastian, 60488 Frankfurt am Main (DE)
(74) Vertreter: Continental Corporation

(56) Entgegenhaltungen:
- DE-A1- 102015 215 180
- DE-T5- 112017 007 019
- JP-B2- 6 784 058
- US-A1- 2020 005 731

## Beschreibung

Die vorliegende Erfindung betrifft ein Head-Up-Display mit einer Anzeigevorrichtung mit einer bildgebenden Einheit mit einem Anzeigeelement zum Anzeigen eines Bildes und einer Optikeinheit zum Projizieren des Bildes auf eine Projektionsfläche.

Derartige Head-Up-Displays können beispielsweise für ein Fortbewegungsmittel verwendet werden. Unter einem Head-Up-Display, auch als HUD bezeichnet, wird ein Anzeigesystem verstanden, bei dem der Betrachter seine Blickrichtung beibehalten kann, da die darzustellenden Inhalte in sein Sichtfeld eingeblendet werden. Während derartige Systeme aufgrund ihrer Komplexität und Kosten ursprünglich vorwiegend im Bereich der Luftfahrt Verwendung fanden, werden sie inzwischen auch im Automobilbereich in Großserie verbaut.

Head-Up-Displays umfassen im Allgemeinen eine bildgebende Einheit oder PGU (Picture Generating Unit), eine Optikeinheit und eine Spiegeleinheit. Die bildgebende Einheit erzeugt das Bild und nutzt dazu zumindest ein Anzeigeelement. Die Optikeinheit leitet das Bild auf die Spiegeleinheit. Die Spiegeleinheit ist eine teilweise spiegelnde, lichtdurchlässige Scheibe. Der Betrachter sieht also die von der bildgebenden Einheit dargestellten Inhalte als virtuelles Bild und gleichzeitig die reale Welt hinter der Scheibe. Als Spiegeleinheit dient im Automobilbereich oftmals die Windschutzscheibe, deren gekrümmte Form bei der Darstellung im Allgemeinen zu berücksichtigen ist. Durch das Zusammenwirken von Optikeinheit und Spiegeleinheit ist das virtuelle Bild eine vergrößerte Darstellung des von der bildgebenden Einheit erzeugten Bildes. Die bildgebende Einheit und die Optikeinheit werden in der Regel durch ein Gehäuse mit einer transparenten Abdeckung gegen die Umgebung abgegrenzt.

Für Head-Up-Displays wird derzeit üblicherweise eine Flüssigkristallanzeige (LCD: Liquid Crystal Display) mit einer Hinterleuchtung für die bildgebende Einheit genutzt. Auch Anzeigen basierend auf OLED-Technologie (OLED: Organic Light Emitting Diode, organische Leuchtdiode) und DMD-Technologie (Digital Micromirror Device) finden Verwendung.

DE 11 2017 007 019 T5 betrifft eine Fahrzeuganzeigesteuervorrichtung.

JP 6 784058 B2 betrifft ein Informationsanzeigegerät. US 2020/005731 A1 betrifft ein Verfahren zum Einstellen einer Beleuchtungseinrichtung eines Head-Up-Displays.

Vor diesem Hintergrund beschreibt DE 10 2015 215 180 A1 ein Head-Up-Display für ein Fahrzeug. Das Head-Up-Display umfaßt eine Anzeigevorrichtung zum Ausstrahlen von Licht mit einer Bilderzeugungseinheit, sowie eine Bildsteuereinheit zum Ansteuern der Bilderzeugungseinheit. Dabei wird in Abhängigkeit von der Blickrichtung eines Nutzers in Bereichen der Anzeigevorrichtung eine reduzierte Helligkeit eingestellt. Dies ermöglicht eine Reduzierung des Energieaufwands bei der Bilderzeugung. Es verhindert aber nicht, daß bei niedriger Umgebungshelligkeit eine Blendung des Nutzers erfolgt, wenn die nicht in ihrer Helligkeit reduzierten Bereiche der Anzeigevorrichtung zu hell eingestellt sind, oder eine Signalstörung auftritt. Ein demgegenüber verbessertes Head-Up-Display ist erwünscht.

Ein erfindungsgemäßes Head-Up-Display ist in Anspruch 1 angegeben. Es weist auf eine Anzeigevorrichtung mit einer Bilderzeugungseinheit mit einem Anzeigeelement zum Anzeigen eines Bildes und einem Treiber für das Anzeigeelement, einer Optikeinheit zum Projizieren des Bildes auf eine Projektionsfläche, einer Bildsteuereinheit zum Ansteuern der Bilderzeugungseinheit über deren Treiber. Dabei weist die Bilderzeugungseinheit eine Bildhelligkeitsüberwachungseinrichtung auf, die einen Bildsignaleingang aufweist, der mit einem Bildsignalausgang der Bildsteuereinheit verbunden ist, und einen Signalausgang der mit einem Eingang des Treibers verbunden ist.

Dies hat den Vorteil, dass die Bildhelligkeit so nahe am Ort der Bilderzeugung überwacht wird, dass nahezu keine Möglichkeit besteht, dass nach der Überwachung noch Störungen auftreten, die eine zu hohe Bildhelligkeit hervorrufen können. Dadurch wird die Sicherheit für einen Nutzer des Head-Up-Display erhöht.

Aufwendige Maßnahmen zur Abschirmung einer Signalleitung zwischen Bildsteuereinheit und Anzeigeelement sind überflüssig. Die Verbindungen der Bildhelligkeitsüberwachungseinrichtung mit der Bildsteuereinheit bzw. dem Anzeigeelement kann sowohl direkt oder über eine oder mehrere zwischengeschaltete Elemente erfolgen. Signalstörungen können insbesondere im Automobilbereich mit immer mehr Elektronik auf immer kleinerem Raum nie ganz ausgeschlossen werden. Daher sind eine Fehlerüberwachung und eine Reaktion darauf sinnvoll. Durch die erfindungsgemäß ganz weit ans Ende der Signalstrecke verlegte Fehlerüberwachung wird das Restrisiko, dass nach der Fehlerüberwachung noch eine Störung auftritt minimiert. Die vom Nutzer wahrgenommene Bildhelligkeit kann durch unterschiedliche Maßnahmen beeinflusst werden. Basiert das Anzeigeelement auf LCD-Technologie oder einer anderen Technologie, bei der das Anzeigeelement durchleuchtet wird, so wird vorteilhaft dessen Transparenz beeinflusst. Basiert das Anzeigeelement auf OLED-Technologie oder einer anderen Technologie, bei der das Anzeigeelement selbstleuchtend ist, so wird vorteilhaft dessen Leuchtstärke beeinflusst. Bei reflektiven Anzeigeelementen, beispielsweise auf DMD-Technologie basierend, wird entsprechend deren Reflektivität beeinflusst.

Vorteilhaft ist die Bildhelligkeitsüberwachungseinrichtung zwischen Bildsteuereinheit und Treiber angeordnet. Die Bildhelligkeitsüberwachungseinrichtung ist dabei beispielsweise in der Bilderzeugungseinheit oder auf dem Anzeigeelement angeordnet. Dies hat den Vorteil, dass eine Abschirmung der Signalleitungen zwischen Bildhelligkeitsüberwachungseinrichtung und Treiber über eine Störsignalabschirmung der Bilderzeugungseinheit erfolgen kann, beispielsweise deren Metallgehäuse oder einer andersgearteten Abschirmung.

In einer hier nicht beanspruchten Ausführung ist die Bildhelligkeitsüberwachungseinrichtung zwischen Treiber und Anzeigeelement angeordnet. Dies hat den Vorteil, dass die Bildhelligkeit Überwachungseinrichtung noch näher am Anzeigeelement angeordnet ist, wodurch die Wahrscheinlichkeit von Störsignalen weiter verringert ist. Es ist in diesem Fall keine besondere Störsignalabschirmung der Bilderzeugungseinheit erforderlich, wenn eine entsprechende Abschirmung des Treibers oder des Anzeigeelements mitgenutzt wird.

Erfindungsgemäß ist vorgesehen, Bildhelligkeitsüberwachungseinrichtung und Treiber in einem gemeinsamen Bauteil zu realisieren. Beispielsweise ist die Bildhelligkeitsüberwachungseinrichtung in einen Treiber-IC integriert oder separate Einheiten von Bildhelligkeitsüberwachungseinrichtung und Treiber sind, ähnlich wie beim Konzept "System-On-Chip", auf einem einzigen Bauteil vormontiert. Dies hat den Vorteil, dass nur ein einziges Bauteil zu montieren ist, und nur eine einzige Störsignalabschirmung für dieses Bauteil erforderlich ist.

Gemäß Erfindung ist die Bildhelligkeitsüberwachungseinrichtung eingerichtet, für ein in einem bestimmten Zeitraum darzustellendes Bild die Helligkeit der ihr über ein Eingangssignal übermittelten Bildpunkte zu summieren, und, wenn dabei ein Grenzwert überschritten wird, die Helligkeit der Bildpunkte zu reduzieren. Das Reduzieren kann vorteilhaft ein komplettes Abschalten sein. Die Bildhelligkeitsüberwachungseinrichtung kann in diesem Fall einfach aufgebaut sein und somit schnell auf eine drohende Blendung des Nutzers reagieren, da nur eine geringe Anzahl von Verarbeitungsschritten erforderlich ist. Die Reduzierung der Helligkeit erfolgt in diesem Fall schon bevor eine störende Blendung des Nutzers auftreten kann.

Ebenfalls vorteilhaft ist ein Reduzieren um einen festen Wert. Wenn beispielsweise bekannt ist, dass 25% der maximalen Helligkeit keine störende Blendung des Nutzers hervorruft, dann wird die Helligkeit aller Bildpunkte auf 25% ihres aktuellen Werts reduziert. Das Reduzieren um einen festen Wert hat den Vorteil, dass weiterhin ein sichtbares Bild für den Nutzer zur Verfügung steht, wenn auch mit reduzierter Helligkeit. Dennoch wird der Nutzer nicht komplett von den Bildinformationen abgeschnitten, ist aber gleichzeitig vor Blendung geschützt.

Gemäß einer Ausgestaltung ist die Bildhelligkeitsüberwachungseinrichtung eingerichtet, Bildpunkte einer ersten Gruppe von Bildpunkten in ihrer Helligkeit stärker zu reduzieren als Bildpunkte einer zweiten Gruppe. Vorteilhafterweise werden die Bildpunktgruppen dabei so gewählt, dass die zweite Gruppe besonders sicherheitskritische Informationen enthält, die auf jeden Fall für den Nutzer sichtbar sein sollten, und die erste Gruppe Informationen enthält, die im Hinblick auf die Fahrsicherheit weniger kritisch sind. Somit wird die Fahrsicherheit erhöht, sowohl durch Vermeidung der Blendung des Nutzers als auch durch Bereitstellen von sicherheitskritischen Informationen für den Nutzer. Ein stärkeres Reduzieren kann hier ebenfalls bis zur kompletten Abschaltung eines Bildpunktes reichen.

Gemäß einer Ausgestaltung weist die Bildhelligkeitsüberwachungseinrichtung einen Fehlersignalausgang auf, der mit einem Fehlersignaleingang der Bildsteuereinheit verbunden ist. Dies hat den Vorteil einer Rückmeldung an die Bildsteuerungseinheit. Diese kann - gegebenenfalls nach einer Latenzzeit - die Helligkeitswerte ihres Ausgangssignals reduzieren. Ein weiterer Vorteil besteht darin, dass die Bildhelligkeitsüberwachungseinrichtung keine eigene Signalverarbeitung für das darzustellenden Bildsignal aufzuweisen braucht, sondern dezidiert auf die Überwachung des Bildsignals und das Ausgeben eines Fehlersignals ausgelegt sein kann. Dies reduziert die Komplexität, erhöht die Zuverlässigkeit und vereinfacht die Implementierung.

Weitere Merkmale der vorliegenden Erfindung werden aus der nachfolgenden Beschreibung und den angehängten Ansprüchen in Verbindung mit den Figuren ersichtlich.

### Figurenübersicht

Fig. 1 zeigt schematisch ein Head-Up-Display mit einer erfindungsgemäßen Anzeigevorrichtung;
Fig. 2 eine perspektivische Darstellung einer Ausführungsform einer Anzeigevorrichtung;
Fig. 3 zeigt ein Funktionsschema einer Bildhelligkeitsüberwachungseinrichtung.

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

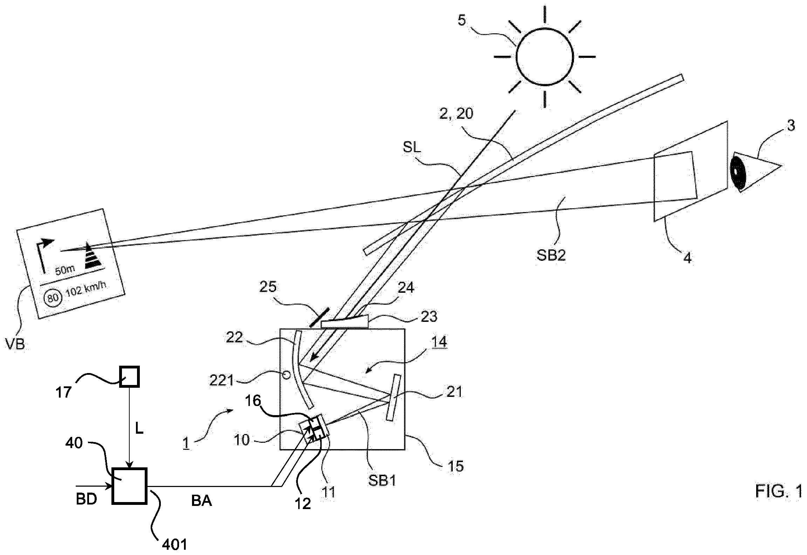

Fig. 1 zeigt schematisch ein Head-Up-Display mit einer erfindungsgemäßen Anzeigevorrichtung. Das Head-Up-Display weist eine Anzeigevorrichtung 1 mit einer bildgebenden Einheit 10 und einer Optikeinheit 14 auf. Von einem Anzeigeelement 11 geht ein Strahlenbündel SB1 aus, welches von einem Faltspiegel 21 auf einen gekrümmten Spiegel 22 reflektiert wird, der es in Richtung einer Spiegeleinheit 2 reflektiert. Die Spiegeleinheit 2 ist hier als Windschutzscheibe 20 des Kraftfahrzeugs dargestellt. Von dort gelangt das Strahlenbündel SB2 in Richtung eines Auges eines Betrachters 3.

Der Nutzer 3 sieht ein virtuelles Bild VB, welches sich außerhalb des Kraftfahrzeugs oberhalb der Motorhaube oder sogar vor dem Kraftfahrzeug befindet. Durch das Zusammenwirken von Optikeinheit 14 und Spiegeleinheit 2 ist das virtuelle Bild VB eine vergrößerte Darstellung des vom Anzeigeelement 11 angezeigten Bildes. Hier sind symbolisch eine Geschwindigkeitsbegrenzung, die aktuelle Fahrzeuggeschwindigkeit sowie Navigationsanweisungen dargestellt. So lange sich das Auge des Nutzers 3 innerhalb einer durch ein Rechteck angedeuteten Eyebox 4 befindet, sind alle Elemente des virtuellen Bildes VB für den Nutzer 3 sichtbar. Befindet sich das Auge des Nutzers 3 außerhalb der Eyebox 4, so ist das virtuelle Bild VB für den Nutzer 3 nur noch teilweise oder gar nicht sichtbar. Je größer die Eyebox 4 ist, desto weniger eingeschränkt ist der Nutzer bei der Wahl seiner Sitzposition.

Die Krümmung des gekrümmten Spiegels 22 ist an die Krümmung der Windschutzscheibe 20 angepasst und sorgt dafür, dass die Bildverzeichnung über die gesamte Eyebox 4 stabil ist. Der gekrümmte Spiegel 22 ist mittels einer Lagerung 221 drehbar gelagert. Die dadurch ermöglichte Drehung des gekrümmten Spiegels 22 ermöglicht ein Verschieben der Eyebox 4 und somit eine Anpassung der Position der Eyebox 4 an die Position des Nutzers 3. Der Faltspiegel 21 dient dazu, dass der vom Strahlenbündel SB1 zurückgelegte Weg zwischen Anzeigeelement 11 und gekrümmtem Spiegel 22 lang ist, und gleichzeitig die Optikeinheit 14 dennoch kompakt ausfällt. Die bildgebende Einheit 10 und die Optikeinheit 14 werden durch ein Gehäuse 15 mit einer transparenten Abdeckung 23 gegen die Umgebung abgegrenzt. Die optischen Elemente der Optikeinheit 14 sind somit beispielsweise gegen im Innenraum des Fahrzeugs befindlichen Staub geschützt. Auf der Abdeckung 23 befindet sich weiterhin eine optische Folie bzw. ein Polarisator 24. Das Anzeigeelement 11 ist typischerweise polarisiert und die Spiegeleinheit 2 wirkt wie ein Analysator. Zweck des Polarisators 24 ist es daher, die Polarisation zu beeinflussen, um eine gleichmäßige Sichtbarkeit des Nutzlichts zu erzielen. Ein Blendschutz 25 dient dazu, das über die Grenzfläche der Abdeckung 23 reflektierte Licht sicher zu absorbieren, so dass keine Blendung des Nutzers hervorgerufen wird. Außer dem Sonnenlicht SL kann auch das Licht einer anderen Störlichtquelle 5 auf das Anzeigeelement 11 gelangen. In Kombination mit einem Polarisationsfilter kann der Polarisator 24 zusätzlich auch genutzt werden, um einfallendes Sonnenlicht SL zu reduzieren.

Eine weitere Blendung des Nutzers kann auftreten, wenn das vom Anzeigeelement 11 erzeugte virtuelle Bild VB viel heller ist als die Umgebungshelligkeit. Das Auge des Nutzers ist dann auf geringe Helligkeit eingestellt, und wird vom virtuellen Bild VB geblendet, wenn dieses nicht angepasst wird. Dazu ist ein Lichtsensor 17 vorgesehen, der die Umgebungshelligkeit erfasst und der Bildsteuereinheit 40 ein entsprechendes Signal zuführt. Diese passt dann die Helligkeitswerte der Bildpunkte eines darzustellenden Bildes BD an und gibt ein angepasstes Bildsignal BA an ihrem Bildsignalausgang 401 ab. Dies wird zum einen einem Treiber 12 zugeführt, der das Anzeigeelement 11 ansteuert. Zum anderen wird das Bildsignal BA einer Bildhelligkeitsüberwachungseinrichtung 16 zugeführt. Diese überwacht, ob die Bildhelligkeit zu hoch ist, und leitet eine geeignete Reaktion ein. Im einfachsten Fall besteht diese darin, das Anzeigeelement 11 abzuschalten, so dass es kein Licht abgibt, egal welches Bildsignal BA anliegt. Eine Fehlfunktion des Lichtsensors 17 oder der Bildsteuereinheit sowie eventuell auftretende Veränderungen des Helligkeitswerts der Bildpunkte des Bildsignals BA auf Signalübertragungsstrecken führt dann nicht zu einer Blendung des Nutzers.

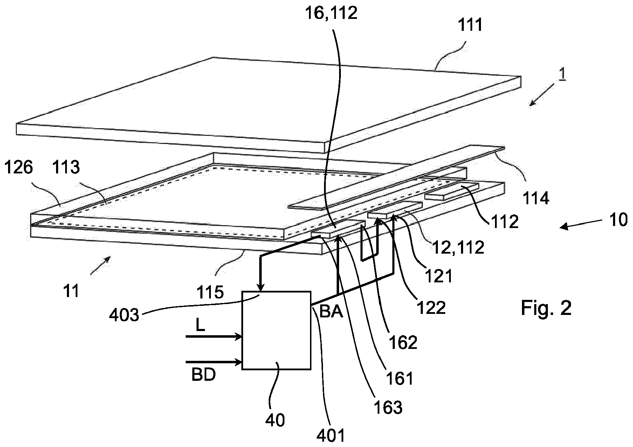

Fig. 2 zeigt eine perspektivische Darstellung einer Ausführungsform einer Anzeigevorrichtung 1 eines erfindungsgemäßen Head-Up-Displays mit mehreren elektronischen Bauteilen 112, von denen zumindest eines ein Treiber 12 ist. Ein wärmeleitendes Element 114 ist über den elektronischen Bauteilen 112 angeordnet. Dargestellt ist eine perspektivische Explosionszeichnung der Anzeigevorrichtung 1. Bei den elektronischen Bauteilen 112 handelt es sich bei diesem Ausführungsbeispiel um die Bildhelligkeitsüberwachungseinrichtung 16, einen Treiber 12 für das Anzeigeelement 11, und ein weiteres Bauteil 112, die alle drei auf einem Substrat 115 des Anzeigeelements 11 angrenzend an eine hier gestrichelt dargestellte aktive Fläche 113 angeordnet sind. Auf der aktiven Fläche 113 befindet sich eine Abdeckung 126, deren Ausgestaltung und Funktion vom Display-Typ abhängt. Bei einem Flüssigkristalldisplay ist die Abdeckung 126 beispielsweise ein Farbfilter-Glas, bei einem OLED-Display hingegen ein Deckglas, das zur Einkapselung benötigt wird. Die aktive Fläche 113 ist typischerweise geringfügig kleiner als die Abdeckung 126. Oberhalb des Anzeigeelements 11 ist ein Deckglas 111 vorgesehen. Das wärmeleitende Element 114 erstreckt sich hier über die gesamte Breite des Anzeigeelements 11 und somit über alle drei Bauteile 112. Durch das flächige Aufbringen eines wärmeleitenden Elements 114 aus einem geeigneten Material mit hohem Wärmeleitwert wird der Wärmeeintrag der Bauteile 112 gleichmäßig verteilt und die Temperatur an ihnen reduziert.

An der Bildsteuereinheit 40 erkennt man den Bildsignalausgang 401, von dem ein Bildsignal BA des anzuzeigenden Bildes sowohl an einen Bildsignaleingang 161 der Bildhelligkeitsüberwachungseinrichtung 16 als auch an einen Bildsignaleingang 121 des Treibers 12 gelangt. Die Bildhelligkeitsüberwachungseinrichtung 16 prüft das Bildsignal BA daraufhin, ob es eine zu große Helligkeit aufweist. Ist dies der Fall, wird über einen Signalausgang 162 ein entsprechendes Signal an einen Signaleingang 122 des Treibers 12 abgegeben. Im einfachsten Fall ist dies ein Fehlersignal FS, welches auf das Vorliegen eines Fehlers hinweist. Der Treiber 12 schaltet dann das gesamte Anzeigeelement 11 auf "schwarz", oder er reduziert die Helligkeit des gesamten Anzeigeelements 11 auf einen vorgegebenen Bruchteil der Helligkeit der im Bildsignal BA enthaltenen Bildpunkte, oder leitet eine andere geeignete Maßnahme ein. Gemäß einer Variante stellt bereits die Bildhelligkeitsüberwachungseinrichtung 16 ein Signal bereit, welches den Treiber 12 anweist, in welcher Art und Weise auf die festgestellte zu große Helligkeit reagiert werden soll. Die Anweisung kann beispielsweise darin bestehen, einen Bruchteil vorzugeben, um den die Helligkeit aller Bildpunkte zu reduzieren ist. Die Anweisung kann auch darin bestehen, eine bestimmte Gruppe von Bildpunkten vorzugeben, deren Helligkeit zu reduzieren ist. Diese Gruppe kann beispielsweise ein Randbereich sein, in dem üblicherweise weniger sicherheitsrelevante Informationen angezeigt werden als in einem zentralen Bereich.

Die Bildhelligkeitsüberwachungseinrichtung 16 gibt gemäß einer weiteren Variante über einen Fehlersignalausgang 163 ein Signal an einen Fehlersignaleingang 403 der Bildsteuereinheit 40 ab. Diese kann dann in geeigneter Weise darauf reagieren, beispielsweise indem sie das Lichtsensorsignal L des Lichtsensors 17 ignoriert, und die Helligkeit der Bildpunkte des von ihr ausgesandten anzuzeigenden Bildsignals BA solange reduziert, bis an ihrem Fehlersignaleingang 403 kein Fehlersignal mehr anliegt. Im hier gezeigten Ausführungsbeispiel ist die Bildhelligkeitsüberwachungseinrichtung 16 zwischen der Bildsteuereinheit 40 und dem Treiber 12 angeordnet. Sie kann auch in den Treiber 12 integriert sein. Sie kann auch zwischen Treiber 12 und Anzeigeelement 11 angeordnet sein, was hier nicht dargestellt und nicht beansprucht ist.

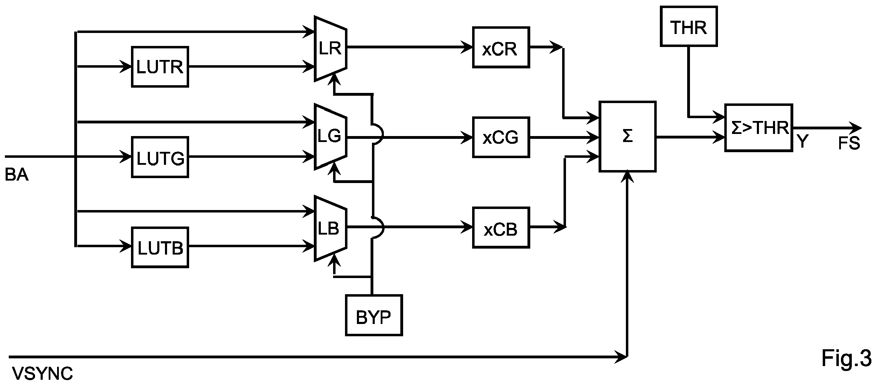

Fig. 3 zeigt ein Funktionsschema einer Bildhelligkeitsüberwachungseinrichtung 16. Als Eingangssignale sind hier das anzuzeigende Bildsignal BA sowie das vertikale Synchronisationssignal VSYNC gezeigt, als Ausgangssignal ein Fehlersignal FS. Das Bildsignal BA wird für die drei Farben, in denen es vorliegt - hier in Rot, Grün und Blau - getrennt behandelt. Entweder wird aus einer Tabelle LUTR, LUTG, LUTB ein zu dem entsprechenden Farbanteil ausgelesener Helligkeitswert verwendet, oder direkt der jeweilige Helligkeitswert des Bildsignals BA verwendet. Ein Bypass-Block BYP gibt dies vor, die entsprechenden Helligkeitswerte LR, LG, LB werden dann mit Koeffizienten CR, CG, CB multipliziert. Da die Helligkeit für die unterschiedlichen Farben vom menschlichen Nutzer unterschiedlich wahrgenommen werden ist es sinnvoll, die Helligkeit der unterschiedlichen Farbanteile unterschiedlich stark zu gewichten. Die gewichteten Helligkeitswerte LR x CR, LG x CG und LB x CB werden über einen gewissen Zeitraum, vorzugsweise über ein Vollbild, aufsummiert. Das vertikale Synchronisationssignal VSYNC wird dazu genutzt, die Summe Σ an die nächste Stufe weiterzugeben, und das Summieren erneut bei Null zu beginnen. Es wird in diesem Fall also immer über die Zeitdauer eines Vollbilds summiert. Ist die Summe Σ größer als ein vorgegebener Grenzwert THR, dann wird ein Fehlersignal FS ausgegeben.

Die Erfindung betrifft in anderen Worten eine Transparenzüberwachung zur Blendvermeidung im Head-Up-Display am Ende der Bildverarbeitungskette. Um im Head-Up-Display eine Blendvermeidung für die Funktionale Sicherheit zu realisieren wird eine Überwachung der Bildtransparenz, also der Helligkeit des darzustellenden Bildes BA, gefordert. Oftmals wird eine solche Transparenzüberwachung in einem Chip auf dem Übertragungsweg vor dem Anzeigeelement 11 realisiert. Auf dem dazu verwendeten Interface zum Display-Controller, beispielsweise dem Treiber 12, oder auch im Display-Controller selbst, können noch Fehlfunktionen auftreten, die zur Blendung des Fahrers führen. Erfindungsgemäß wird daher die Transparenzüberwachung in der Übertragungskette möglichst weit nach hinten angeordnet. Eine Überwachung des tatsächlich von der Anzeigeeinheit 11 angezeigten Bildes per Kamera ist sehr aufwendig. Daher wird vorgeschlagen, die Transparenzüberwachung, also die Überwachung der Bildhelligkeit, im Display-Controller, vorzugsweise einem auf dem Displayglas beziehungsweise dem Substrat 115 angeordneten Treiber 12 zu implementieren. Vorteilhaft ist die Transparenzüberwachung möglichst weit hinten in der Verarbeitungskette des Display-Controllers angeordnet, um möglichst viele potentielle Fehlerquellen abzudecken. Im hier nicht beanspruchten Idealfall ist eine Bildhelligkeitsüberwachungseinrichtung 16 dem Treiber 12 nachgeordnet, also zwischen diesem und der Anzeigeeinheit 11 angeordnet. Fehler auf dem Interface zwischen der Bildsteuereinheit 40, beispielsweise einem Grafikchip, und dem Treiber 12, beispielsweise einem Display-Controller, können erfindungsgemäß überwacht und erkannt werden.

## Patentansprüche

1. Head-Up-Display mit einer Anzeigevorrichtung (1) mit
- einer Bilderzeugungseinheit (10) mit einem Anzeigeelement (11) zum Anzeigen eines Bildes und einem Treiber (12) für das Anzeigeelement (11),
- einer Optikeinheit (14) zum Projizieren des Bildes auf eine Projektionsfläche (2,20),
- einer Bildsteuereinheit (40) zum Ansteuern des Anzeigeelements (10) über dessen Treiber (12),
- wobei die Bilderzeugungseinheit (10) eine Bildhelligkeitsüberwachungseinrichtung (16) aufweist, die einen Bildsignaleingang (161) aufweist, der mit einem Bildsignalausgang (401) der Bildsteuereinheit (40) verbunden ist, und einen Signalausgang (162) der mit einem Signaleingang des Treibers (12) verbunden ist, wobei die Bildhelligkeitsüberwachungseinrichtung (16) eingerichtet ist, für ein in einem Zeitraum darzustellendes Bild die Helligkeit (LR,LG,LB) der ihr über ein Eingangssignal übermittelten Bildpunkte zu summieren, und, wenn ein Grenzwert (THR) überschritten wird, die Helligkeit der Bildpunkte zu reduzieren.

2. Head-Up-Display nach Anspruch 1, wobei Bildhelligkeitsüberwachungseinrichtung (16) und Treiber (12) in einem Bauteil realisiert sind.

3. Head-Up-Display nach einem der vorhergehenden Ansprüche, wobei die Bildhelligkeitsüberwachungseinrichtung (16) eingerichtet ist, Bildpunkte einer ersten Gruppe von Bildpunkten in ihrer Helligkeit stärker zu reduzieren als Bildpunkte einer zweiten Gruppe.

4. Head-Up-Display nach einem der vorhergehenden Ansprüche, wobei die Bildhelligkeitsüberwachungseinrichtung (16) einen Fehlersignalausgang (163) aufweist, der mit einem Fehlersignaleingang (403) der Bildsteuereinheit (40) verbunden ist.

## Claims

1. Head-up display having a display apparatus (1) with
- a picture-generating unit (10) with a display element (11) for displaying an image and a driver (12) for the display element (11),
- an optical unit (14) for projecting the image onto a projection surface (2, 20),
- an image control unit (40) for controlling the display element (10) via the driver (12) thereof,
- wherein the picture-generating unit (10) comprises an image brightness monitoring device (16) having an image signal input (161), which is connected to an image signal output (401) of the image control unit (40), and a signal output (162), which is connected to a signal input of the driver (12), wherein the image brightness monitoring device (16) is configured to sum the brightness (LR, LG, LB) of the image points, transmitted to the former via an input signal, for an image which is to be represented within a time period, and, if a limit value (THR) is exceeded, to reduce the brightness of the image points.

2. Head-up display according to Claim 1, wherein the image brightness monitoring device (16) and the driver (12) are implemented in one component.

3. Head-up display according to either of the preceding claims, wherein the image brightness monitoring device (16) is configured to reduce image points of a first group of image points in terms of their brightness more strongly than image points of a second group.

4. Head-up display according to any of the preceding claims, wherein the image brightness monitoring device (16) has an error signal output (163) connected to an error signal input (403) of the image control unit (40).

## Revendications

1. Affichage tête haute pourvu d'un dispositif d'affichage (1) comprenant
- une unité génératrice d'image (10) comportant un élément d'affichage (11) destiné à afficher une image et un circuit d'attaque (12) pour l'élément d'affichage (11),
- une unité optique (14) destinée à projeter l'image sur une surface de projection (2, 20),
- une unité de commande d'image (40) destinée à commander l'élément d'affichage (10) par l'intermédiaire de son circuit d'attaque (12),
- dans lequel l'unité génératrice d'image (10) comporte un dispositif de surveillance de luminosité d'image (16) qui comporte une entrée de signal d'image (161) reliée à une sortie de signal d'image (401) de l'unité de commande d'image (40), et une sortie de signal (162) reliée à une entrée de signal du circuit d'attaque (12), dans lequel le dispositif de surveillance de luminosité d'image (16) est conçu pour additionner, pour une image à représenter au cours d'un intervalle de temps, la luminosité (LR, LG, LB) des points d'image qui lui sont transmis par l'intermédiaire d'un signal d'entrée et, lorsqu'une valeur limite (THR) est dépassée, pour réduire la luminosité des points d'image.

2. Affichage tête haute selon la revendication 1, dans lequel le dispositif de surveillance de luminosité d'image (16) et le circuit d'attaque (12) sont réalisés dans un composant.

3. Affichage tête haute selon l'une quelconque des revendications précédentes, dans lequel le dispositif de surveillance de luminosité d'image (16) est conçu pour réduire davantage la luminosité des points d'image d'un premier groupe de points d'image que celle des points d'image d'un second groupe.

4. Affichage tête haute selon l'une quelconque des revendications précédentes, dans lequel le dispositif de surveillance de luminosité d'image (16) comporte une sortie de signal d'erreur (163) qui est reliée à une entrée de signal d'erreur (403) de l'unité de commande d'image (40).
